# EUROPÄISCHE PATENTSCHRIFT

(11) **EP 1 659 322 B1**
(45) Veröffentlichungstag und Bekanntmachung des Hinweises auf die Patenterteilung: **02.01.2008**
(21) Anmeldenummer: 05024059.7
(22) Anmeldetag: 04.11.2005
(51) Int. Cl.: F16K 35/02, F16K 31/60

(54) **Drehgriff für Sanitärarmaturen**
Rotary handle for sanitary fittings
Poignée rotative pour des installations sanitaires

(30) Priorität: 19.11.2004 DE 102004056100
(43) Veröffentlichungstag der Anmeldung: 24.05.2006
(73) Patentinhaber: Grohe AG, 58675 Hemer (DE)
(72) Erfinder: Frankholz, Christian, 58730 Fröndenberg (DE); Heupel, Norbert, 59872 Meschede (DE)

(56) Entgegenhaltungen:
- EP-A- 0 232 454
- EP-A- 0 961 063
- EP-A- 1 061 300
- DE-A1- 10 259 008

## Beschreibung

Die Erfindung betrifft einen Drehgriff für eine Sanitärarmatur mit einer vom Benutzer fassbaren Griffhaube, die auf einer mit einem Betätigungsglied der Sanitärarmatur verbindbaren Hülse angeordnet ist, wobei zur Begrenzung des Drehwinkels eine Anschlagwippe vorgesehen ist, die um eine Achse entgegen der Kraft einer Feder mit ihrem Anschlagarm aus ihrer Anschlagposition an einem an der Sanitärarmatur angeordneten Anschlag wegschwenkbar ist, wobei die Hülse als Tragkörper ausgebildet ist, an oder in dem die Anschlagwippe angeordnet ist, und wobei auf den Tragkörper die Griffhaube, in oder an der eine Taste zur Betätigung der Anschlagwippe vorgesehen ist, axial aufbringbar ist.

Ein derartiger Drehgriff ist aus der deutschen Offenlegungsschrift DE 102 59 008 A1 bekannt.

Der Erfindung liegt die Aufgabe zugrunde, den Drehgriff weiter zu verbessern.

Diese Aufgabe wird bei einem gattungsgemäßen Drehgriff dadurch gelöst, dass an oder in dem Tragkörper neben der Anschlagwippe auch Festanschläge angeordnet sind, und dass die Anschlagwippe und die Taste als getrennte Bauteile ausgebildet sind.

Weitere Ausgestaltungen der Erfindung sind in den Ansprüchen 2 bis 21 angegeben.

Die mit der Erfindung erzielbaren Vorteile bestehen insbesondere darin, dass die Anschlagkräfte ausschließlich von dem Tragkörper aufgenommen werden. Da der Tragkörper von der Griffhaube verdeckt wird, kann er aus entsprechend festem Werkstoff hergestellt werden. Dem gegenüber kann die sichtbare Griffhaube jeweils zu dem entsprechenden Einsatzgebiet ausgebildet werden. Der Tragkörper, der auch als innerer Griff bezeichnet werden kann, kann somit für eine Vielzahl von Griffen verwendet werden, während die Griffhaube den jeweiligen Designanforderungen angepasst werden kann. Die für den Benutzer zugängliche Taste in der Betätigungshaube drückt dabei nur auf die vom Tragkörper gehaltene Anschlagwippe und wird nicht durch Kräfte der Anschläge belastet, so dass eine einfache Lagerung und eine Vielzahl von Werkstoffen hierfür einsetzbar sind.

In weiterer Ausgestaltung der Erfindung kann die Wippe vorteilhaft in einem Fenster des Tragkörpers angeordnet werden. Die Achse der Anschlagwippe kann sowohl parallel zur Längsachse des Drehgriffes als auch senkrecht zur Längsachse des Drehgriffes ausgebildet werden. Die Anschlagwippe kann hierbei mit einer Schenkelfeder im Bereich der Achse oder mit einer Schraubenfeder im Bereich eines Hebelarms versehen sein, von der die Anschlagwippe jeweils in die Anschlagposition gedrückt wird. Die Schwenkachse kann einstückig an der Anschlagwippe als Welle ausgebildet sein. Sie kann aber auch als separates Bauteil ausgebildet sein, dass axial durch die Lager und eine entsprechende Lagerbohrung der Anschlagwippe einbringbar ist.
Die Taste in der Griffhaube kann als Druckknopf in einer Öffnung in der Griffhaube ausgebildet sein. Der Druckknopf kann vorteilhaft im Querschnitt rechteckig gestaltet sein, wobei die beiden schmalen Stirnseiten zweckmäßig verrundet ausgebildet sind.
In einer bevorzugten Ausbildung der Erfindung ist die Taste als einarmiger Hebel ausgebildet, wobei der Hebel im Querschnitt u-förmig ausgebildet ist und eine gewölbte Grifffläche trägt, die aus einer Aufnahmeöffnung in der Griffhaube vorsteht. Die Taste kann hierbei zweckmäßig einstückig mit einer Drehachse, einem Dorn für eine Rückstellfeder sowie einem Druckstück, mit dem der Hebel an der Anschlagwippe anliegt, hergestellt werden.
In weiterer Ausgestaltung der Erfindung kann die drehfeste Verbindung zwischen der Griffhaube und dem Tragkörper mit Hilfe eines Polygonprofils, z. B. als Sechskant oder als Riefenverzahnung, erfolgen. Zusätzlich können hierzu noch mit Hilfe von an der Innenwandung der Griffhaube Passfedern angeformt sein, mit denen die Griffhaube in der Stecklage spielfrei in entsprechende Nuten am Außenmantel des Tragkörpers einfasst.

Nach einer weiteren Ausgestaltung der Erfindung können die Endanschläge für die Begrenzung des maximalen Drehwinkels fest angeformt oder auch als Kreisringsegmente einsteckbar um Tragkörper ausgebildet werden.

Ausführungsbeispiele der Erfindung sind in der Zeichnung dargestellt und werden im Folgenden näher beschrieben. Es zeigt in der Zeichnung
- Figur 1: eine zum Teil gezeigte Sanitärarmatur mit einem Drehgriff, wobei der Drehgriff im Längsschnitt dargestellt ist;
- Figur 2: einen in Figur 1 gezeigten Tragkörper des Drehgriffs in Seitenansicht mit einer Anschlagwippe;
- Figur 3: den in Figur 2 gezeigten Tragkörper um 90° gedreht;
- Figur 4: den in Figur 2 gezeigten Tragkörper ohne Anschlagwippe;
- Figur 5: den in Figur 4 gezeigten Tragkörper um 90° gedreht;
- Figur 6: die in Figur 1 gezeigte Anschlagwippe in Seitenansicht;
- Figur 7: die in Figur 6 gezeigte Anschlagwippe um 90° gedreht;
- Figur 8: die in Figur 1 gezeigte Taste in Seitenansicht;
- Figur 9: die in Figur 8 gezeigte Taste in Ansicht von oben;
- Figur 10: ein anderes Ausführungsbeispiel einer Sanitärarmatur mit einem Drehgriff in der Schnittebene X der Figur 11;
- Figur 11: den in Figur 10 gezeigten Drehgriff in der Schnittebene XI;
- Figur 12: die in Figur 10 gezeigte Griffhaube mit einer Taste;
- Figur 13: die in Figur 12 gezeigte, als einarmiger Hebel ausgebildete Taste;
- Figur 14: die in Figur 13 gezeigte Taste in Ansicht von unten;
- Figur 15: die in Figur 13 gezeigte Taste in Perspektivansicht schräg von unten;
- Figur 16: den in Figur 10 gezeigten Tragkörper mit Anschlagwippe in Richtung des Pfeils XVI;.
- Figur 17: den Tragkörper aus Figur 16 in der Schnittebene XVII;
- Figur 18: den in Figur 17 gezeigten Tragkörper um 90° gedreht, in Seitenansicht;
- Figur 19: die in Figur 10 gezeigte Anschlagwippe in Ansicht von oben;
- Figur 20: die in Figur 19 gezeigte Anschlagwippe um 90° gedreht;
- Figur 21: den in Figur 18 gezeigten Tragkörper ohne Anschlagwippe;
- Figur 22: den Anschlagkörper in der Schnittebene XXII der Figur 23;
- Figur 23: den in Figur 22 gezeigten Tragkörper in Ansicht von unten;
- Figur 24: eine alternative Ausbildung der Endanschläge in Form eines Ringsegments, das in den Tragkörper einsteckbar ist, in Perspektivansicht;
- Figur 25: das in Figur 24 gezeigte Ringelement in Seitenansicht;
- Figur 26: das in Figur 25 gezeigte Ringsegment in Ansicht von oben;
- Figur 27: einen Tragkörper 23 mit eingestecktem Ringelement.

Der Einfachheit halber sind bei den Ausführungsbeispielen in der Zeichnung gleiche oder entsprechende Elemente mit jeweils gleichen Bezugszeichen versehen.

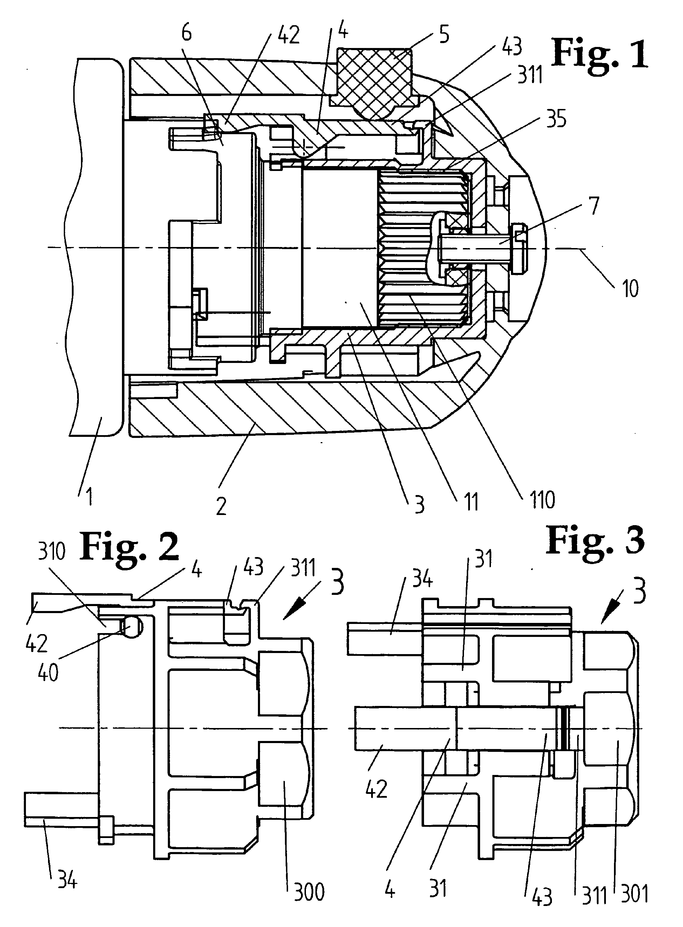

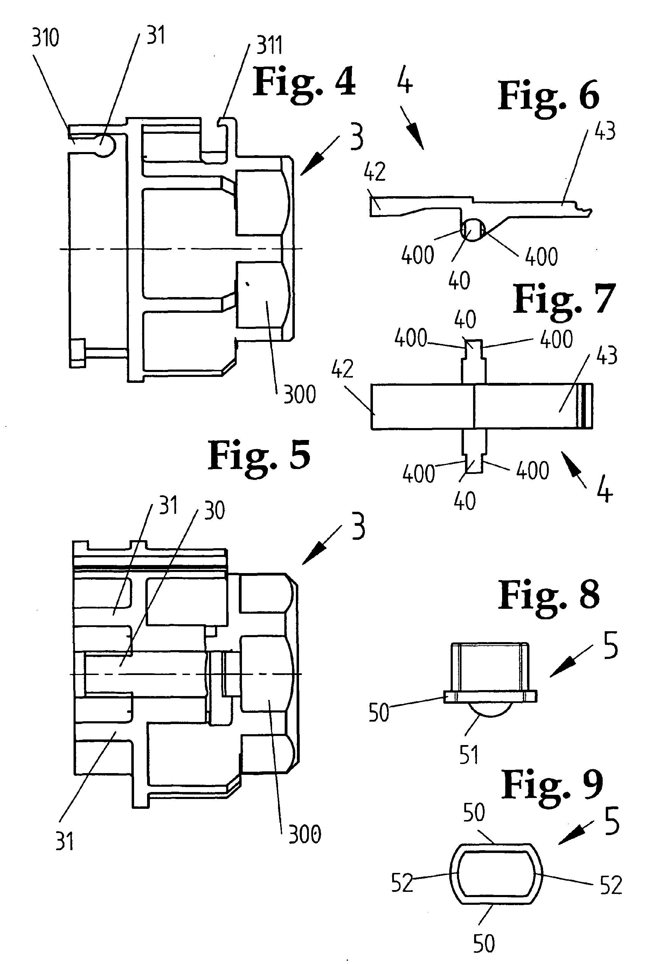

In dem in Figur 1 bis 9 gezeigten Ausführungsbeispiel ist an einer zum Teil dargestellten Sanitärarmatur 1 ein um eine Drehachse 10 bewegbares Betätigungsglied 11 angeordnet.
Auf dem Betätigungsglied 11 ist eine am Außenmantel ausgebildete Verzahnung 110 vorgesehen. Koaxial zum Betätigungsglied 11 ist ein feststehender Anschlagring 6 an der Sanitärarmatur 1 befestigt. Auf dem Betätigungsglied 11 ist ein Tragkörper 3 mit einer entsprechenden Innenverzahnung 35 drehfest gehalten. An dem Tragkörper 3 ist ein Festanschlag 34 sowie eine als lösbarer Anschlag wirkende Anschlagwippe 4 angeordnet, die beide mit dem Anschlagring 6 zusammenwirken.
Die Anschlagwippe 4 ist dabei in einem Fenster 30 des Tragkörpers 3 angeordnet, wobei zu beiden Seiten jeweils ein Lager 31 für die einstückig als Welle an der Anschlagwippe 4 ausgebildete Achse 40 vorgesehen ist. Die Achse 40 ist an beiden Endbereichen im Bereich der Lager 31 mit zwei parallelen Abflachungen 400 versehen, die senkrecht zu den Armen der Anschlagwippe 4 ausgebildet sind, wie es insbesondere aus Figur 6 und 7 der Zeichnung zu entnehmen ist. Die Lager 31 in dem Tragkörper 3 weisen dabei parallel zur Drehachse 10 jeweils einen Radialschlitz 310 auf, der so bemessen ist, dass die Achse 40 mit den Abflachungen 400 radial in die Lager 310 eingeschoben werden kann. Hierbei werden vorher auf die Achse 40 in der Zeichnung nicht dargestellte Schenkelfedern aufgeschoben. Die so komplettierte Anschlagwippe 4 wird dann mit Hilfe der Abflachungen 400 in vertikaler Drehstellung seitlich über die Radialschlitze 310 in die Lager 31 eingeführt und anschließend in die waagerechte Drehstellung gebracht, wodurch die Achse 40 von den Lagern 31 radial gehalten ist. Eine Anschlagnase 42 eines Arms der Anschlagwippe 4 ragt nun axial von dem Tragkörper 3 vor, wie es insbesondere aus Figur 2 und 3 der Zeichnung zu entnehmen ist. Ein gegenüberliegender Stellarm 43 ist von einem federnden Rastarm 311 am Tragkörper 3 parallel zur Drehachse 10 gehalten, wobei die Schenkelfedern die Anschlagwippe 4 mit dem Stellarm 43 gegen den Rastarm 311 drücken.
Auf den so komplettierten Tragkörper 3 kann eine Griffhaube 2 axial aufgeschoben werden. Senkrecht zur Drehachse 10 ist hierbei in der Wandung der Griffhaube 2 in einer entsprechenden Öffnung eine Taste 5 angeordnet. Die Taste 5 durchgreift die Wandung der Griffhaube 2 und ist im Querschnitt etwa rechteckig ausgebildet, wobei zwei schmale Stirnseiten 52 verrundet ausgebildet sind, wie es insbesondere aus Figur 8 und 9 der Zeichnung zu entnehmen ist. An der Innenseite der Griffhaube 2 ist die Taste 5 mit einem umlaufenden Ringbund 50 versehen, so dass die maximale Vorkraglänge der Taste 5 aus der Griffhaube 2 von dem Ringbund 50 begrenzt wird. An der inneren Stirnseite der Taste 5 ist außerdem ein ballig ausgebildeter Vorsprung 51 angeformt, mit dem die Taste 5 an dem Stellarm 43 der Anschlagwippe 4 anliegt, wie es insbesondere aus Figur 1 der Zeichnung zu entnehmen ist.
Die Griffhaube 2 wird dabei mit Hilfe eines Sechskants 300 in der Stecklage drehfest mit dem Tragkörper 3 verbunden. Die Sicherung in Steckposition des Tragkörpers 3 mit der Griffhaube 2 auf dem Betätigungsglied 11 erfolgt mit einer auf der Drehachse 10 angeordneten Schraube 7.
In der in Figur 1 gezeigten Stellung der Anschlagwippe 4 befindet sich die Anschlagnase 42 in der Anschlagposition zum Anschlag 6. Die hierbei auftretenden Anschlagkräfte werden von den Seitenwänden des Fensters 30 auf den Tragkörper 3 übertragen. Soll die Anschlagnase 42 der Anschlagwippe 4 aus dem Anschlagbereich des Anschlags 6 entfernt werden, so erfolgt dieses durch ein Drücken auf die Taste 5, wodurch entgegen der Kraft der Schenkelfedern über die Achse 40 die Anschlagnase 42 vom Anschlag 6 radial weggeschwenkt wird. Wird der Druck von der Taste 5 entfernt, so führen die beiden in der Zeichnung nicht dargestellten Schenkelfedern die Anschlagwippe 4 wieder in ihre Ausgangsposition zurück.

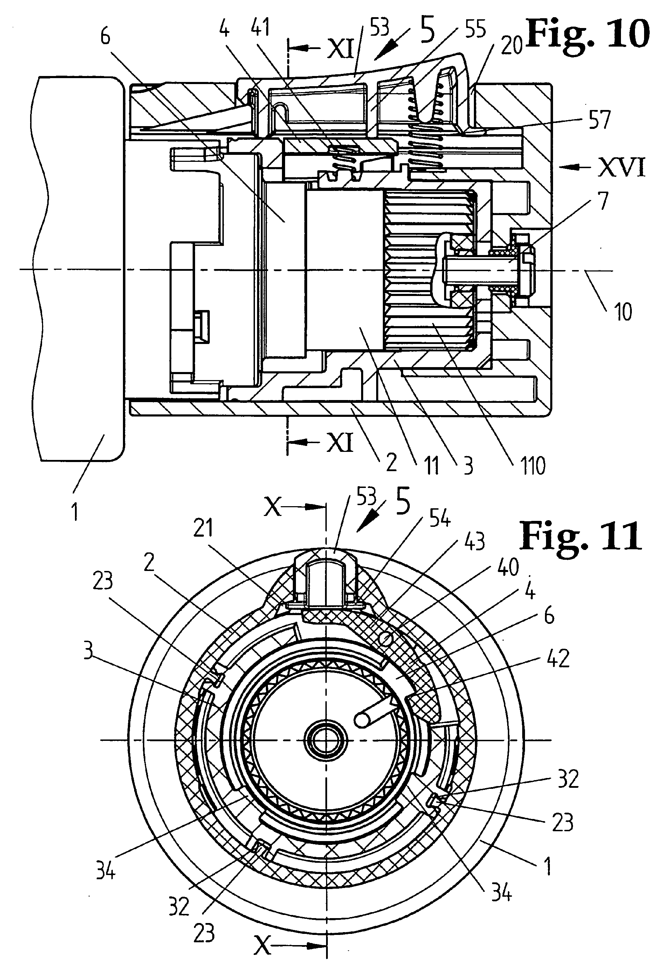

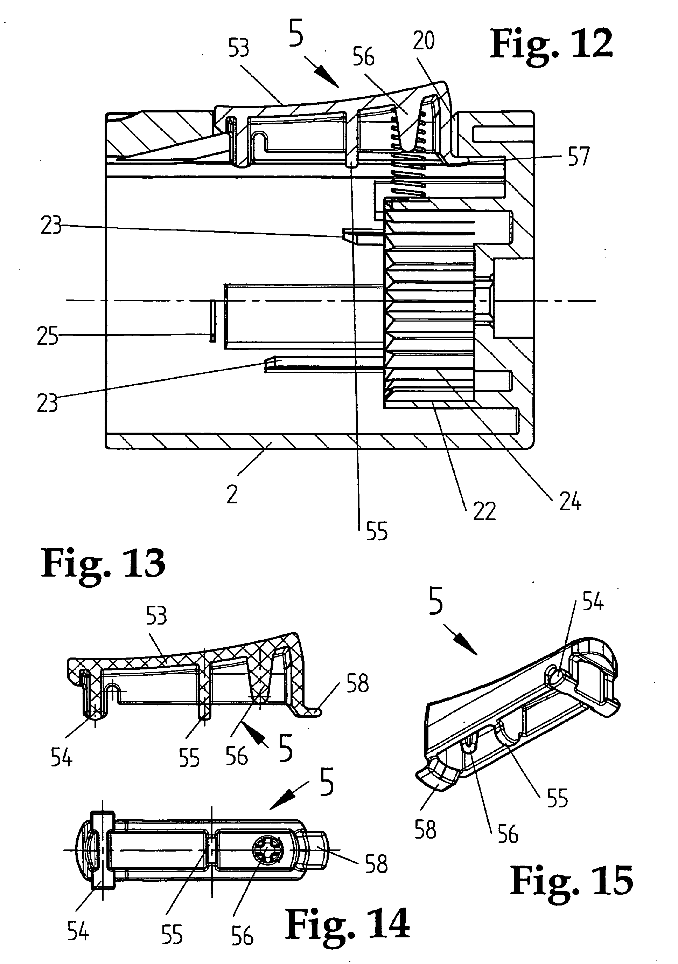

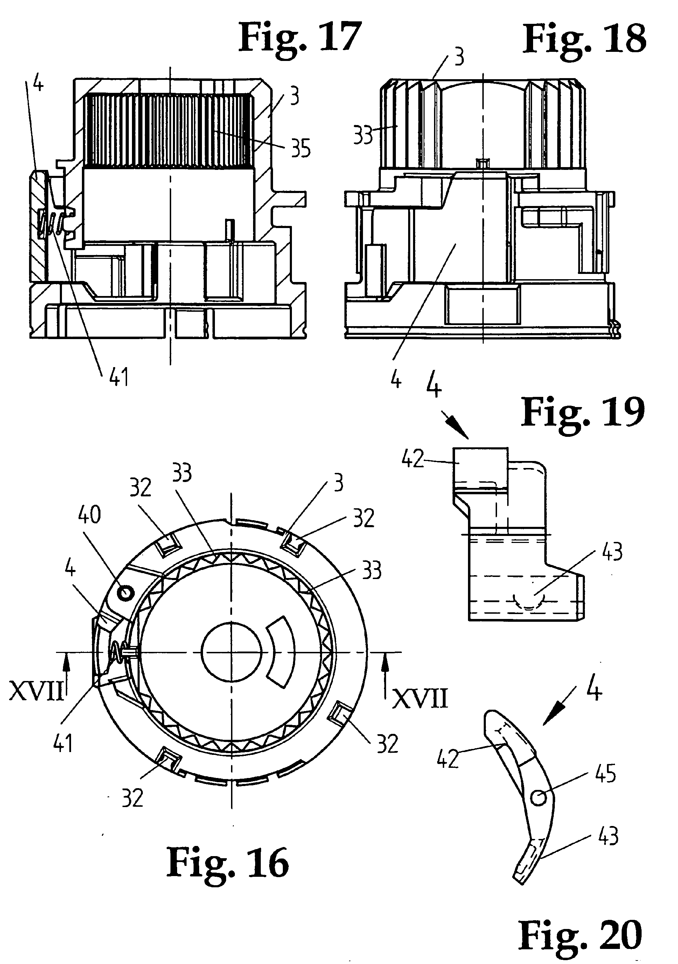

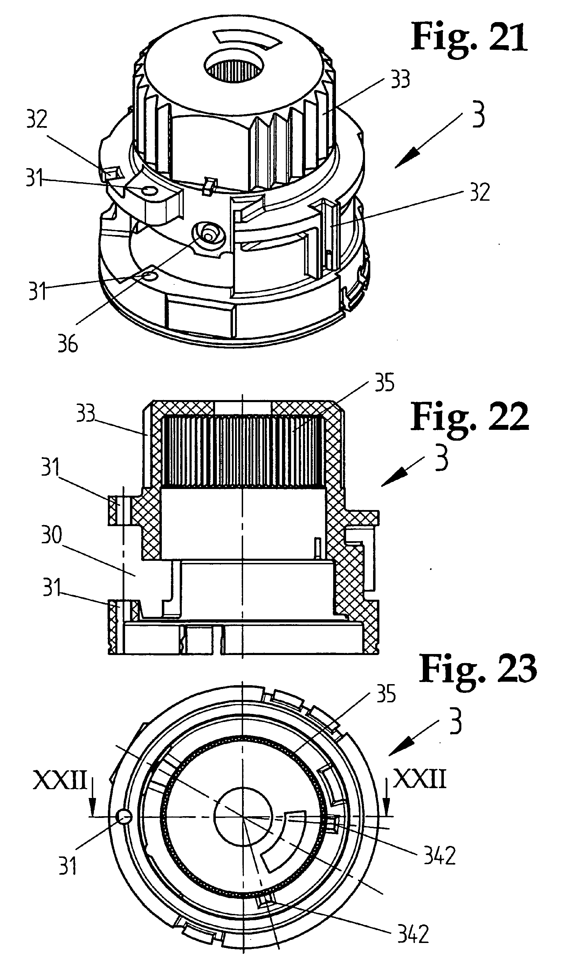

Ein weiteres Ausführungsbeispiel der Erfindung ist in der Zeichnung in Figur 10 bis 27 dargestellt.
Hierbei ist die Anschlagwippe 4 mit einer Achse 40 versehen, die parallel zur Drehachse 10 des Betätigungsglieds 11 angeordnet ist, wie es insbesondere aus Figur 11 der Zeichnung zu entnehmen ist. In die Lager 31 und einer Lagerbohrung 45 in der Anschlagwippe 4 ist eine separate Achse 40 eingebracht. Die Anschlagnase 42 der Anschlagwippe 4 befindet sich in der Anschlagposition zum Anschlag 6. Die Anschlagwippe 4 wird hierbei von einer schraubenförmigen Feder 41, die einerseits an einem Stellarm 43 und andererseits im Bereich eines Dorns 36 am Tragkörper 3 abgestützt ist, in die Anschlagposition gedrückt. Der Stellarm 43 der Anschlagwippe liegt dabei an der Taste 5 an.
Die Taste 5 ist als einarmiger Hebel ausgebildet, wie es insbesondere aus Figur 13 bis 15 der Zeichnung zu entnehmen ist. Die Taste 5 ist im Querschnitt u-förmig ausgebildet und trägt eine aus einer Aufnahmeöffnung 20 der Griffhaube 2 vorstehende gewölbte Grifffläche 53. An dem einen Ende der Taste 5 ist eine Drehachse 54 ausgebildet, mit der sie in einem Lager 21 der Griffhaube 2 gehalten ist. Mit Abstand zur Drehachse 54 ist ein Druckstück 55 an der Taste 5 angeformt, mit dem die Taste 5 am Stellarm 43 der Anschlagwippe 4 anliegt. Am äußeren Endbereich ist außerdem ein Dorn 56 für die Aufnahme einer Rückstellfeder 57 angeformt. Die Rückstellfeder 57 wird anderseits an einem zylindrischen Ansatz 22 der Griffhaube 2 abgestützt. Die Taste 5 hat schließlich an der der Drehachse 54 gegenüberliegenden Stirnseite einen Anschlag 58, der an der Innenwandung der Griffhaube 2 anliegt und die Rückführung der Taste 5 durch die Rückstellfeder 57 begrenzt.
Die Griffhaube 2 ist mit einem konzentrischen Ansatz 22 versehen, in der eine Innenverzahnung 24 ausgebildet ist, wie es insbesondere aus Figur 12 der Zeichnung zu entnehmen ist. Außerdem sind an der Innenwandung der Griffhaube zwei Passfedern 23 eingeformt. Beim axialen Zusammenfügen des Tragkörpers 3 mit der Griffhaube 2 wird die Drehstellung durch die Passfedern 23, die in entsprechende Nuten 32 einfassen vorgegeben. Zusätzlich erfolgt die Drehsicherung über die Innenverzahnung 24, die in der Stecklage in eine Außenverzahnung 33 des Tragkörpers einfasst. Die Stecklage von Griffhaube 2 und Tragkörper 3 wird dabei von einer Rastzunge 25 gesichert, so dass die Baueinheit, bestehend aus Griffhaube 2, Tragkörper 3, Anschlagwippe 4 und Taste 5, auf dem Betätigungsglied 11 mit Hilfe der Schraube 7 befestigt werden kann. Die Drehsicherung zwischen dem Betätigungsglied 11 und dem Tragkörper 3 erfolgt wiederum über eine Verzahnung 110.
Die Anschlagwippe 4 kann mit ihrer Anschlagnase 42 radial von dem Anschlag 6 weggeschwenkt werden. Hierzu wird vom Benutzer die Taste 5 an der Grifffläche 53 in die Aufnahmeöffnung 20 entgegen der Kraft der Rückstellfeder 57 gedrückt. Das Druckstück 55 wirkt hierbei auf den Stellarm 43 der Anschlagwippe 4 ein, wodurch entgegen der Kraft der Feder 41 die Anschlagwippe 4 von dem Anschlag 6 radial weggeschwenkt wird. In dieser Stellung kann somit das Betätigungsglied 11 innerhalb eines Schwenkwinkels, der von Festanschlägen 34 bestimmt ist, gedreht werden. Wird vom Benutzer die Taste 5 wieder entlastet, so wird die Anschlagwippe von der Kraft der Feder 41 wieder zurückgeschwenkt, so dass auch die Anschlagnase 42 radial in die Anschlagposition zurückgeschwenkt wird.

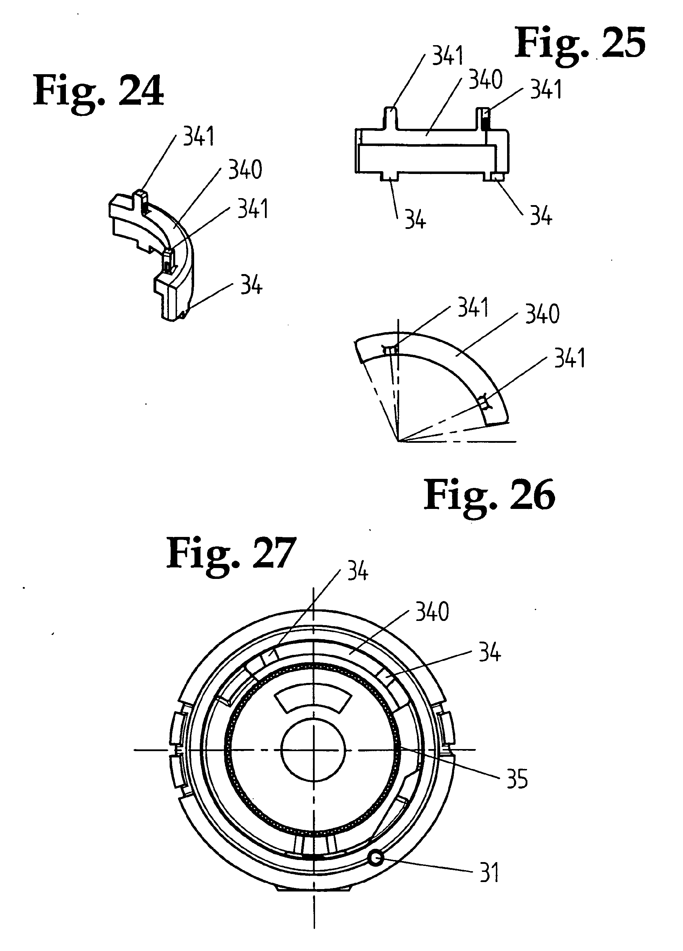

Anstatt der einstückig an dem Tragkörper 3 ausgebildeten Festanschläge 34 können die Festanschläge 34 auch an einem Ringsegment 340 ausgebildet sein, wie es insbesondere aus Figur 24 bis 27 der Zeichnung zu entnehmen ist. An dem Ringsegment 340 sind gegenüberliegend zu den Festanschlägen 34 Steckzapfen 341 ausgebildet, mit denen das Ringsegment 340 in entsprechende Ausnehmungen des Tragkörpers 3 einsteckbar ist. Hierdurch kann ein Tragkörper 3 mit unterschiedlich positionierten Festanschlägen 34 je nach Bedarf ausgerüstet werden.

## Patentansprüche

1. Drehgriff für eine Sanitärarmatur (1) mit
- einer vom Benutzer fassbaren Griffhaube (2), die auf einer mit einem Betätigungsglied (11) der Sanitärarmatur (1) verbindbaren Hülse angeordnet ist,
- wobei zur Begrenzung des Drehwinkels eine Anschlagwippe (4) vorgesehen ist, die um eine Achse (40) entgegen der Kraft einer Feder (41) mit ihrem Anschlagarm aus ihrer Anschlagposition an einem an der Sanitärarmatur (1) angeordneten Anschlag (6) wegschwenkbar ist,
- wobei die Hülse als Tragkörper (3) ausgebildet ist, an oder in dem die Anschlagwippe (4) angeordnet ist, und
- wobei auf den Tragkörper (3) die Griffhaube (2), in oder an der eine Taste (5) zur Betätigung der Anschlagwippe (4) vorgesehen ist, axial aufbringbar ist,
**dadurch gekennzeichnet,**
- **dass** an oder in dem Tragkörper (3) neben der Anschlagwippe (4) auch Festanschläge angeordnet sind und
- **dass** die Anschlagwippe (4) und die Taste (5) als getrennte Bauteile ausgebildet sind.

2. Drehgriff nach Anspruch 1, **dadurch gekennzeichnet, dass** die Anschlagwippe (4) in einem Fenster (30) des Tragkörpers (3) angeordnet und mit einer Achse (40) seitlich neben dem Fenster (30) in Lager (31) gehalten ist.

3. Drehgriff nach Anspruch 2, **dadurch gekennzeichnet, dass** die Achse (40) senkrecht zur Drehachse (10) des Tragkörpers (3) angeordnet ist.

4. Drehgriff nach Anspruch 3, **dadurch gekennzeichnet, dass** die Achse (40) an der Anschlagwippe (4) ausgebildet und radial über jeweils einen Axialschlitz (310) in die Lager (31) einbringbar ist.

5. Drehgriff nach wenigstens einem der vorhergehenden Ansprüche, **dadurch gekennzeichnet, dass** die Feder als Schenkelfeder ausgebildet ist.

6. Drehgriff nach Anspruch 1 oder 2, **dadurch gekennzeichnet, dass** die Achse (40) parallel zur Drehachse (10) des Tragkörpers (3) angeordnet ist.

7. Drehgriff nach wenigstens einem der vorhergehenden Ansprüche, **dadurch gekennzeichnet, dass** die Achse (40) als Welle ausgebildet und axial in die Lager (31) und eine Lagerbohrung (45) der Anschlagwippe (4) einbringbar ist.

8. Drehgriff nach wenigstens einem der vorhergehenden Ansprüche, **dadurch gekennzeichnet, dass** die Feder (41) als Schraubenfeder ausgebildet ist und einerseits im Mantelbereich des Tragkörpers (3) und andererseits an einem Stellarm (43) der Anschlagwippe (4) anliegt.

9. Drehgriff nach wenigstens einem der vorhergehenden Ansprüche, **dadurch gekennzeichnet, dass** die Taste (5) als Druckknopf in einer Öffnung in der Wandung der Griffhaube (2) angeordnet ist.

10. Drehgriff nach Anspruch 9, **dadurch gekennzeichnet, dass** der Druckknopf mit einem Ringbund (50) versehen ist, mit dem er an der inneren Wandung der Griffhaube (2) anliegt.

11. Drehgriff nach Anspruch 9 oder 10, **dadurch gekennzeichnet, dass** der Druckknopf mit einem balligen Vorsprung (51) an einem Stellarm (43) der Anschlagwippe (4) anliegt.

12. Drehgriff nach einem der Ansprüche 9 bis 11, **dadurch gekennzeichnet, dass** der Druckknopf im Querschnitt rechteckig ausgebildet ist, wobei die beiden schmalen Stirnseiten (52) verrundet ausgebildet sind.

13. Drehgriff nach wenigstens einem der vorhergehenden Ansprüche, **dadurch gekennzeichnet, dass** die Taste (5) als einarmiger Hebel ausgebildet ist.

14. Drehgriff nach Anspruch 13, **dadurch gekennzeichnet, dass** der Hebel im Querschnitt u-förmig ausgebildet und mit einer gewölbten Grifffläche (53) aus einer Aufnahmeöffnung (20) in der Griffhaube (2) vorsteht, wobei an einem Endbereich eine Drehachse (54) und mit Abstand zur Drehachse (54) ein Druckstück (55) für die Anlage an der Anschlagwippe (4) angeformt sind.

15. Drehgriff nach Anspruch 14, **dadurch gekennzeichnet, dass** die Drehachse (54) über Radialöffnungen in Lager (21) an der Griffhaube (4) einschiebbar ist.

16. Drehgriff nach einem der Ansprüche 13 bis 15, **dadurch gekennzeichnet, dass** in der Taste (5) ein Dorn (56) angeformt ist, der für die Aufnahme einer Rückstellfeder (57) dient, die andererseits an der Mantelfläche eines Ansatzes (22) der Griffhaube (2) abgestützt ist.

17. Drehgriff nach wenigstens einem der vorhergehenden Ansprüche, **dadurch gekennzeichnet, dass** die Taste (5) einstückig aus Kunststoff hergestellt ist.

18. Drehgriff nach wenigstens einem er vorhergehenden Ansprüche, **dadurch gekennzeichnet, dass** die Griffhaube (2) an der Innenmantelfläche parallel zur Drehachse (10) verlaufende Passfedern (23) trägt, die in der Stecklage in entsprechende Nuten (32) am Außenmantel des Tragkörpers (3) in einer bestimmten Drehstellung einfassen und außerdem in der Griffhaube (2) ein Innensechskant oder eine Innenverzahnung (24) vorgesehen ist, die auf einen Sechskant (300) oder in eine Außenverzahnung (33) des Tragkörpers (3) fasst um eine drehfeste Verbindung herzustellen.

19. Drehgriff nach Anspruch 18, **dadurch gekennzeichnet, dass** die Griffhaube (2) mit dem Tragkörper (3) von einer auf der Drehachse (10) angeordneten Schraube (7) axial am Betätigungsglied (11) der Sanitärarmatur (1) befestigt ist.

20. Drehgriff nach wenigstens einem der vorhergehenden Ansprüche, **dadurch gekennzeichnet, dass** am Tragkörper (3) wahlweise Festanschläge (34) anordbar sind.

21. Drehgriff nach Anspruch 20, **dadurch gekennzeichnet dass** die Festanschläge (34) an einem Ringsegment (340) ausgebildet sind, welches mit Steckzapfen (341) am Tragkörper (3) befestigbar ist.

## Claims

1. Rotatable control member for a sanitary fitting (1), having
- a control member cover (2) grippable by the user, which cover is arranged on a sleeve connectible to an actuating element (11) of the sanitary fitting (1),
- there being provided for limiting the angle of rotation a stop rocker member (4) which, against the force of a spring (41), is pivotable by its stop arm about an axle (40) out of its stop position against a stop (6) arranged on the sanitary fitting (1),
- the sleeve being in the form of a support body (3) on which or in which the stop rocker member (4) is arranged, and
- the control member cover (2), in which or on which a key (5) is provided for actuating the stop rocker member (4), being mountable axially on the support body (3),
**characterized in that**
- on or in the support body (3) besides the stop rocker member (4) there are also arranged fixed stops, and
- the stop rocker member (4) and the key (5) are in the form of separate components.

2. Rotatable control member according to claim 1, **characterized in that** the stop rocker member (4) is arranged in an aperture (30) of the support body (3) and is held laterally next to the aperture (30) by an axle (40) in bearings (31).

3. Rotatable control member according to claim 2, **characterized in that** the axle (40) is arranged perpendicular to the rotational axis (10) of the support body (3).

4. Rotatable control member according to claim 3, **characterized in that** the axle (40) is formed on the stop rocker member (4) and is introducible radially into the bearings (31) by way of a respective axial slot (310).

5. Rotatable control member according to at least one of the preceding claims, **characterized in that** the spring is in the form of a leg spring.

6. Rotatable control member according to claim 1 or 2, **characterized in that** the axle (40) is arranged parallel to the rotational axis (10) of the support body (3).

7. Rotatable control member according to at least one of the preceding claims, **characterized in that** the axle (40) is in the form of a shaft and is introducible axially into the bearings (31) and into a bearing bore (45) of the stop rocker member (4).

8. Rotatable control member according to at least one of the preceding claims, **characterized in that** the spring (41) is in the form of a helical spring and rests at one end in the outer wall region of the support body (3) and at the other end against a positioning arm (43) of the stop rocker member (4).

9. Rotatable control member according to at least one of the preceding claims, **characterized in that** the key (5) is arranged as a push-button in an opening in the wall of the control member cover (2).

10. Rotatable control member according to claim 9, **characterized in that** the push-button is provided with an annular collar (50) by which it rests against the inner wall of the control member cover (2).

11. Rotatable control member according to claim 9 or 10, **characterized in that** the push-button has a ball-shaped projection (51) that rests against a positioning arm (43) of the stop rocker member (4).

12. Rotatable control member according to any one of claims 9 to 11, **characterized in that** the push-button is rectangular in cross-section, the two narrow end faces (52) being rounded.

13. Rotatable control member according to at least one of the preceding claims, **characterized in that** the key (5) is in the form of a single-armed lever.

14. Rotatable control member according to claim 13, **characterized in that** the lever is U-shaped in cross-section and has a curved grip surface (53) that projects from a receiving opening (20) in the control member cover (2), there being formed on one end region a rotational shaft (54) and, spaced apart from the rotational shaft (54), a presser element (55) for contact with the stop rocker member (4).

15. Rotatable control member according to claim 14, **characterized in that** the rotational shaft (54) is insertable by way of radial openings into bearings (21) on the control member cover (4).

16. Rotatable control member according to any one of claims 13 to 15, **characterized in that** in the key (5) there is formed a spike (56) which serves for receiving a restoring spring (57) which is supported at its other end on the outer wall surface of an extension (22) of the control member cover (2).

17. Rotatable control member according to at least one of the preceding claims, **characterized in that** the key (5) is made in one piece from plastics material.

18. Rotatable control member according to at least one of the preceding claims, **characterized in that** the control member cover (2) carries, on its inner wall surface, feather keys (23) extending parallel to the rotational axis (10), which feather keys, in the inserted position, fit into corresponding grooves (32) in the outer wall of the support body (3) in a specific rotated position, and in addition there is provided in the control member cover (2) a hexagonal socket or internal toothing (24), which fits onto a hexagonal element (300) or into external toothing (33) of the support body (3) in order to produce a connection for conjoint rotation.

19. Rotatable control member according to claim 18, **characterized in that** the control member cover (2) with the support body (3) is mounted axially on the actuating element (11) of the sanitary fitting (1) by means of a screw (7) arranged on the rotational axis (10).

20. Rotatable control member according to at least one of the preceding claims, **characterized in that** fixed stops (34) can be selectively arranged on the support body (3).

21. Rotatable control member according to claim 20, **characterized in that** the fixed stops (34) are formed on a ring segment (340) which is mountable on the support body (3) by means of push-in pins (341).

## Revendications

1. Poignée tournante pour un robinet d'eau sanitaire (1) comprenant
une coiffe de préhension (2) prise par l'utilisateur, installée sur un manchon relié à un organe d'actionnement (11) du robinet d'eau sanitaire (1),
pour limiter l'angle de rotation, il est prévu un organe basculant (4) qui peut être basculé autour d'un axe (40) contre la force développée par un ressort (41) avec son bras de butée, qui peut être basculé à partir de sa position d'appui contre une butée (6) du robinet d'eau sanitaire (1),
le manchon étant en forme de support (3) dans ou sur lequel est prévu l'organe basculant (4), et
la coiffe de préhension (2) engagée axialement sur l'organe de support (3), comporte une touche (5) pour actionner l'organe basculant (4),
**caractérisée en ce que**
à côté de l'organe basculant (4), l'organe de support (3) comporte également des butées fixes et
l'organe basculant (4) et la touche (5) sont des composants distincts.

2. Poignée tournante selon la revendication 1,
**caractérisée en ce que**
l'organe basculant (4) est logé dans une fenêtre (30) de l'organe de support (3) et il est tenu par un axe (40) latéralement de la fenêtre (30) dans des paliers (31).

3. Poignée tournante selon la revendication 2,
**caractérisée en ce que**
l'axe (40) est perpendiculaire à l'axe de rotation (10) de l'organe de support (3).

4. Poignée tournante selon la revendication 3,
**caractérisée en ce que**
l'axe (40) est réalisé sur l'organe basculant (4) et vient radialement chaque fois par l'intermédiaire d'une fente axiale (310) dans les paliers (31).

5. Poignée tournante selon l'une des revendications précédentes,
**caractérisée en ce que**
le ressort est un ressort à branches.

6. Poignée tournante selon la revendication 1 ou 2,
**caractérisée en ce que**
l'axe (40) est parallèle à l'axe de rotation (10) de l'organe de support (3).

7. Poignée tournante selon au moins l'une des revendications précédentes,
**caractérisée en ce que**
l'axe (40) est en forme d'arbre et vient axialement dans les paliers (31) et dans un perçage de palier (45) de l'organe basculant (4).

8. Poignée tournante selon au moins l'une des revendications précédentes,
**caractérisée en ce que**
le ressort (41) est un ressort hélicoïdal s'appliquant par une extrémité dans la zone-enveloppe de l'organe de support (3) et par l'autre extrémité contre un bras d'actionnement (41) de l'organe basculant (4).

9. Poignée tournante selon au moins l'une des revendications précédentes,
**caractérisée en ce que**
la touche (5) est réalisée comme bouton-poussoir logé dans un orifice de la paroi de la coiffe de préhension (2).

10. Poignée tournante selon la revendication 9,
**caractérisée en ce que**
le bouton-poussoir est muni d'une collerette annulaire (50) par laquelle il s'applique contre la paroi intérieure de la coiffe de préhension (2).

11. Poignée tournante selon les revendications 9 ou 10,
**caractérisée en ce que**
le bouton-poussoir s'applique par une partie en saillie (51) bombée contre le bras d'actionnement (43) de l'organe basculant (4).

12. Poignée tournante selon l'une des revendications 9 à 11,
**caractérisée en ce que**
le bouton-poussoir a une section rectangulaire et ses deux petits côtés frontaux (52) sont arrondis.

13. Poignée tournante selon au moins l'une des revendications précédentes,
**caractérisée en ce que**
la touche (5) est en forme de levier à un bras.

14. Poignée tournante selon la revendication 13,
**caractérisée en ce que**
le levier a une section en forme de U et sa surface de préhension (53) bombée est en saillie d'un orifice de réception (20) de la coiffe de préhension (2),
une zone d'extrémité ayant un axe de rotation (54) et à distance de cet axe de rotation (54) est formée une pièce de poussée (53) pour s'appuyer contre l'organe basculant (4).

15. Poignée tournante selon la revendication 14,
**caractérisée en ce que**
l'axe de rotation (54) s'engage par des ouvertures radiales du palier (21) dans la coiffe de préhension (2).

16. Poignée tournante selon l'une des revendications 13 à 15,
**caractérisée en ce qu'**
une broche (56) est formée sur la touche (5) servant à recevoir un ressort de rappel (57) s'appuyant par son autre extrémité contre la surface-enveloppe d'un prolongement (22) de la coiffe de préhension (2).

17. Poignée tournante selon au moins l'une des revendications précédentes,
**caractérisée en ce que**
la touche (5) est réalisée en une seule pièce en matière plastique.

18. Poignée tournante selon au moins l'une des revendications précédentes,
**caractérisée en ce que**
la coiffe de préhension (2) porte sur sa surface-enveloppe intérieure des clavettes (23) parallèles à l'axe de rotation (10) qui en position engagée viennent dans des rainures correspondantes (32) de l'enveloppe extérieure de l'organe de support (3) pour l'entourer dans une certaine position de rotation et de plus la coiffe de préhension (2) a intérieurement une forme de six pans ou une denture intérieure (24) qui coopère avec un six pans 300 ou une denture extérieure (33) de l'organe de support (3) pour réaliser une liaison solidaire en rotation.

19. Poignée tournante selon la revendication 18,
**caractérisée en ce que**
la coiffe de préhension (2) est fixée à l'organe de support (3) à l'aide d'une vis (7) installée sur l'axe de rotation (10) et venant axialement dans l'organe d'actionnement (11) du robinet d'eau sanitaire (1).

20. Poignée tournante selon au moins l'une des revendications précédentes,
**caractérisée en ce que**
des butées fixes (34) sont prévues au choix sur l'organe de support (3).

21. Poignée tournante selon la revendication 20,
**caractérisée en ce que**
les butées fixes (34) sont réalisées sur un segment annulaire (340) qui se fixe à l'organe de support (3) par un goujon d'enfichage (341).
